**Europäisches Patentamt**

**European Patent Office**

**Office européen des brevets**

(19)

(11) Veröffentlichungsnummer: **0 158 034**
**B1**

(12) # EUROPÄISCHE PATENTSCHRIFT

(45) Veröffentlichungstag der Patentschrift:
**30.03.88**

(51) Int. Cl.⁴: **F 16 D 65/60**

(21) Anmeldenummer: **85101435.7**

(22) Anmeldetag: **11.02.85**

(54) **Nachstellvorrichtung für Fahrzeugbremsen.**

(30) Priorität: **15.03.84 DE 8407890 U**

(43) Veröffentlichungstag der Anmeldung:
**16.10.85 Patentblatt 85/42**

(45) Bekanntmachung des Hinweises auf die Patenterteilung:
**30.03.88 Patentblatt 88/13**

(84) Benannte Vertragsstaaten:
**DE GB IT SE**

(56) Entgegenhaltungen:
**WO - A - 82/01922**
**DE - A - 1 475 516**
**DE - A - 2 120 809**
**DE - A - 2 346 418**
**DE - A - 3 308 539**
**DE - B - 1 237 389**
**FR - E - 92 817**
**GB - A - 2 087 012**
**US - A - 4 164 272**

(73) Patentinhaber: **Bergische Achsenfabrik Fr. Kotz & Söhne, Am Ohlerhammer, D-5276 Wiehl 1 (DE)**

(72) Erfinder: **Ebbinghaus, Wilfried, Perkerstrasse 42, D-5276 Wiehl (DE)**
Erfinder: **Henze, Erwin, Freiherr-vom-Stein-Strasse 28, D-5276 Wiehl (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

ACTORUM AG

## Beschreibung

Gegenstand der Erfindung ist eine Nachstellvorrichtung für Fahrzeugbremsen, insbesondere Kraftfahrzeugbremsen, mit einem als Bremshebel dienenden Gehäuse, in dem ein aus Schnecke und Schneckenrand bestehendes Nachstellgetriebe angeordnet ist, welches über eine Kupplung mit in radialer Ebene liegenden Stirnverzahnungen und ein Treibglied mit einem in das Gehäuse hineinragenden Hebel zusammenarbeitet, der mit einem feststehenden Teil des Fahrzeuges verbunden ist, wobei eine der Stirnverzahnungen der Kupplung an einem auf der Schneckenwelle in Achsrichtung federnd beweglich gelagerten Kupplungsring ausgebildet ist und die Schneckenwelle an dem aus dem Gehäuse ragenden Ende einen Sechskantkopf aufweist.

Aus der DE-A-2 120 809 ist eine Nachstellvorrichtung bekannt, bei der der maximale Hub des Bremshebels durch den maximalen Hub des zwischen der Kupplung und dem Hebel angeordneten Treibgliedes begrenzt wird, welches deshalb einschliesslich seiner Anschlussteile entsprechend stark dimensioniert werden muss. Ein weiterer Nachteil dieser bekannten Nachstellvorrichtung besteht darin, dass die Stirnverzahnung der auf der Schneckenwelle angeordneten Kupplung auch um mehr als eine Zahnteilung nachgestellt werden kann, wenn ein grosser Bremshub, grosse Elastizitäten und Wärmedehnungen zusammentreffen. Dadurch kann das für eine ordnungsgemässe Funktion der Bremsen erforderliche Lüftspiel beseitigt werden. Schliesslich besteht bei dieser bekannten Nachstellvorrichtung die auf der Schneckenwelle angeordnete Kupplung mit der Stirnverzahnung aus zwei selbständigen Konstruktionsteilen.

Aus der DE-B-1 237 389 ist eine Nachstellvorrichtung der eingangs beschriebenen Gattung bekannt, bei der eine der beiden Stirnverzahnungen der Kupplung an einem auf der Schneckenwelle in Achsrichtung federnd beweglich gelagerten Kupplungsring ausgebildet ist, während die andere Stirnverzahnung der Kupplung an einer drehfest mit der Schneckenwelle verbundenen Büchse ausgebildet ist. Damit wird die Kupplung bei dieser bekannten Nachstellvorrichtung von zwei selbständigen Konstruktionsteilen gebildet, die getrennt hergestellt und montiert werden müssen.

Davon ausgehend liegt der Erfindung die Aufgabe zugrunde, eine einfach konstruierte Nachstellvorrichtung zu schaffen, die aus möglichst wenig Einzelteilen besteht, einfach zu montieren, zu demontieren und zu justieren ist.

Zur technischen Lösung dieser Aufgabe wird vorgeschlagen, die andere Stirnverzahnung der Kupplung unmittelbar an der Unterseite des Schneckenwellenkopfes auszubilden.

Bei einer praktischen Ausführungsform können die beiden Stirnverzahnungen schraubenförmig ausgebildet sein, damit in jeder Stellung eine flächige Anlage vorhanden ist. Bei dieser bevorzugten Ausführungsform kann dann der Kupplungsring einschliesslich einer Stirnverzahnung aus einem Sintermetall hergestellt und mit der aus Stahl bestehenden Stirnverzahnung an der Schneckenwelle gepaart werden.

Eine nach dieser technischen Lehre ausgebildete Nachstellvorrichtung hat den Vorteil, dass im Vergleich zum Stand der Technik ein selbständiges Konstruktionselement für die Kupplung zwischen dem Treibglied und der Schneckenwelle weggefallen ist, weil eine der beiden Stirnverzahnungen unmittelbar unter dem Schneckenwellenkopf ausgebildet worden ist. Ein weiterer Vorteil besteht darin, dass es bei dieser technischen Lösung möglich ist, den Kupplungsring einschliesslich seiner Stirnverzahnung kostengünstig aus einem Sintermetall herzustellen und in Verbindung mit schraubenförmigen Verzahnungen mit der aus Stahl bestehenden Stirnverzahnung an der Schneckenwelle zu paaren.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäss ausgebildeten Nachstellvorrichtung in Ansichten und Schnitten dargestellt worden ist. In den Zeichnungen zeigen:

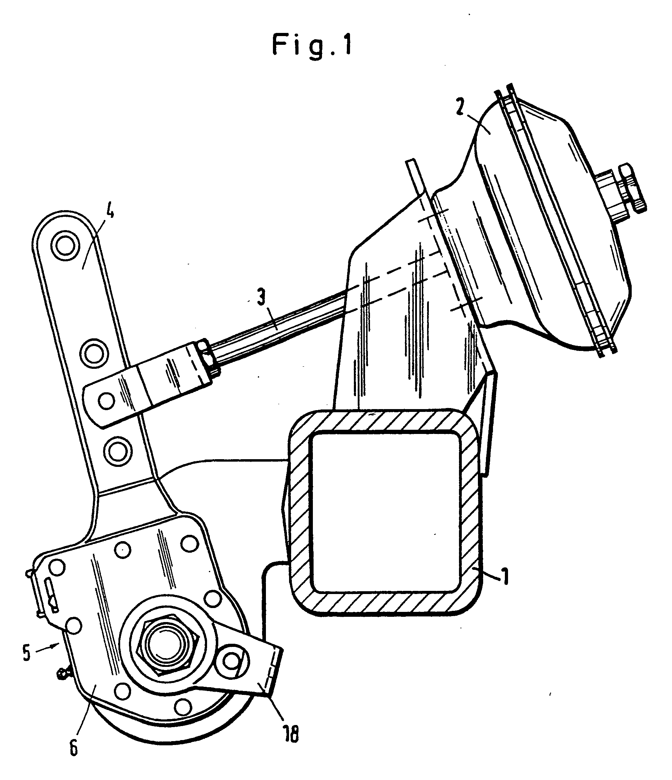

Fig. 1 ein Bremsgestänge mit einer Nachstellvorrichtung in Seitenansicht;

Fig. 2 eine Nachstellvorrichtung mit teilweise entferntem Deckel zur Veranschaulichung einer Hubbegrenzung in Ausgangslage und in Seitenansicht;

Fig. 3 dieselbe Nachstellvorrichtung zur Veranschaulichung der Hubbegrenzung in Endlage in Seitenansicht;

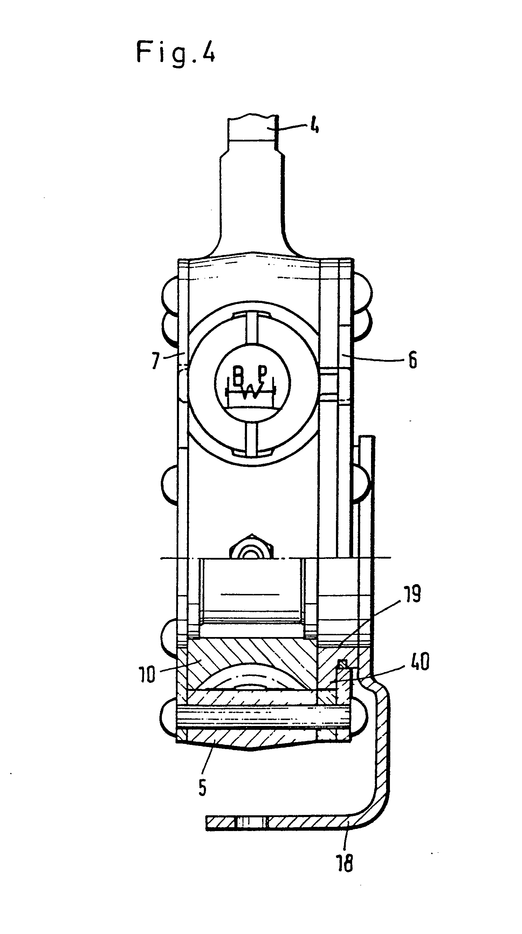

Fig. 4 dieselbe Nachstellvorrichtung entlang der Linie IV–IV in Fig. 2 geschnitten in Stirnansicht;

Fig. 5 dieselbe Nachstellvorrichtung zur Veranschaulichung eines Treibgliedes in Ausgangslage entlang der Linie V–V in Fig. 2 geschnitten;

Fig. 6 dieselbe Nachstellvorrichtung zur Veranschaulichung der Endlage des Treibgliedes entlang der Linie VI–VI in Fig. 3 geschnitten;

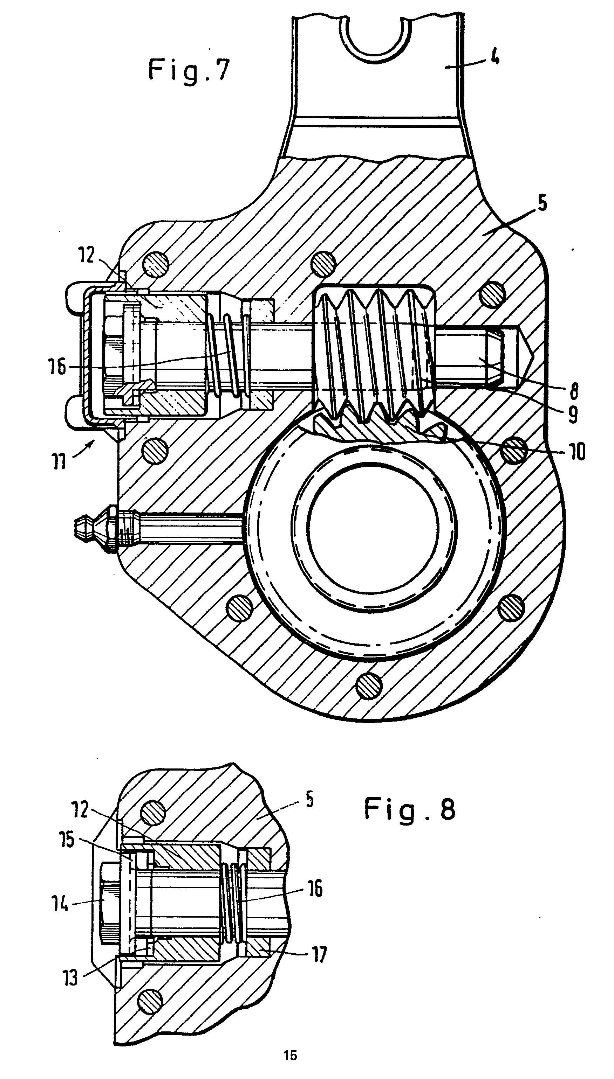

Fig. 7 dieselbe Nachstellvorrichtung zur Veranschaulichung einer in Eingriff befindlichen Stirnverzahnung einer Kupplung zwischen einer Schneckenwelle und einem auf dieser gelagerten Kupplungsring entlang der Linie VII–VII in Fig. 6 geschnitten;

Fig. 8 einen Ausschnitt aus Fig. 7 mit ausgerückter Stirnverzahnung der Kupplung;

Fig. 9 die Schneckenwelle in Seitenansicht;

Fig. 10 dieselbe Schneckenwelle in Ansicht auf ihren Nachstellkopf;

Fig. 11 den Kopf der Schneckenwelle entlang der Linie XI–XI in Fig. 10 geschnitten in vergrösserter Darstellung;

Fig. 12 einen Abschnitt einer Abwicklung der Stirnverzahnung in Richtung des Pfeiles x in Fig. 11 gesehen am inneren Durchmesser;

Fig. 13 dieselbe Abwicklung der Stirnverzahnung wie in Fig. 12 am äusseren Durchmesser.

Ein Bremsgestänge besteht aus einem am Achskörper 1 befestigten Membranzylinder 2 mit einer Kolbenstange 3, die an einem Bremshebel 4 angreift, der auf einer – nicht dargestellten – Bremswelle angeordnet ist. Durch die Bewegung der Kolbenstange können die Bremsnocken in einer Trommelbremse gedreht und damit die Bremsbacken bzw. ihre Bremsbeläge zur Anlage an einer Bremstrommel gebracht werden.

Mit dem Bremshebel 4 ist ein Gehäuse 5 mit einem äusseren Deckel 6 und einem inneren Deckel 7 verbunden, in welchem eine Nachstellvorrichtung zum Ausgleich des Bremsbelagverschleisses angeordnet ist. Die Nachstellvorrichtung besteht aus einer auf einer Schneckenwelle 8 angeordneten Schnecke 9 und einem auf der – nicht dargestellten – Bremswelle mit einer Innenverzahnung befestigten Schneckenrad 10.

Neben der Schnecke 9 ist auf einer Seite in dem Gehäuse 5 eine Kupplung 11 angeordnet, welche aus einem auf der Schneckenwelle 8 gelagerten Kupplungsring 12 mit einer Stirnverzahnung 13 und einer auf der Unterseite eines als Sechskant ausgebildeten Schneckenwellenkopfes 14 angeordneten Stirnverzahnung 15 besteht. Die beiden Stirnverzahnungen 13, 15 werden mit einer auf der Schneckenwelle 8 angeordneten Druckfeder 16 in Eingriff gehalten. Zwischen der Druckfeder 16 und der Schneckenwelle 8 ist auf der anderen Seite eine Bremsscheibe 17 angeordnet, welche ein unbeabsichtigtes Verdrehen der Schneckenwelle 8 verhindert.

Der Kupplungsring 12 kann gegen die Wirkung der Druckfeder 16 so weit in das Gehäuse 5 hinein verschoben werden, dass die Stirnverzahnung 13 ausser Eingriff gelangt, um den Bremshebel 4 im Verhältnis zur – nicht dargestellten – Bremswelle mit einem am Schneckenwellenkopf 14 angreifenden Schlüssel justieren zu können.

Um die – nicht dargestellte – Bremswelle ist ein Hebel 18 angeordnet, der mit einer Hülse 19 unter dem äusseren Deckel 6 hindurch in das Gehäuse 5 hineingeführt ist und am anderen Ende einen Ring 20 mit einem Anschlagnocken 21 besitzt, welcher in eine Aussparung 22 des Gehäuses 5 eingreift. Der Anschlagnocken 21 und die Aussparung 22 begrenzen den maximalen Hub des Bremshebels 4 im Verhältnis zu dem Hebel 18, der mit einem feststehenden Teil des Fahrzeuges, beispielsweise dem Achskörper 1 verbunden ist.

Zwischen der Hülse 19 des Hebels 18 und dem Kupplungsring 12 ist ein flaches Treibglied 23 angeordnet. Dieses Treibglied 23 greift einerseits mit einem runden Kopf 24 in die Hülse 19 und andererseits mit einem Haken 25 in eine Ausnehmung 26 des Kupplungsringes 12 ein.

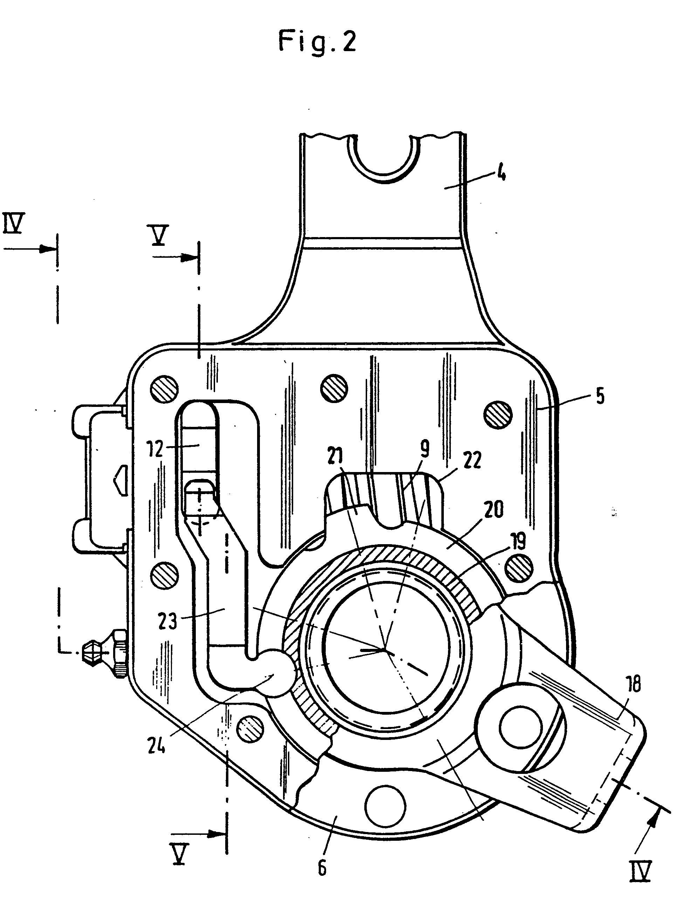

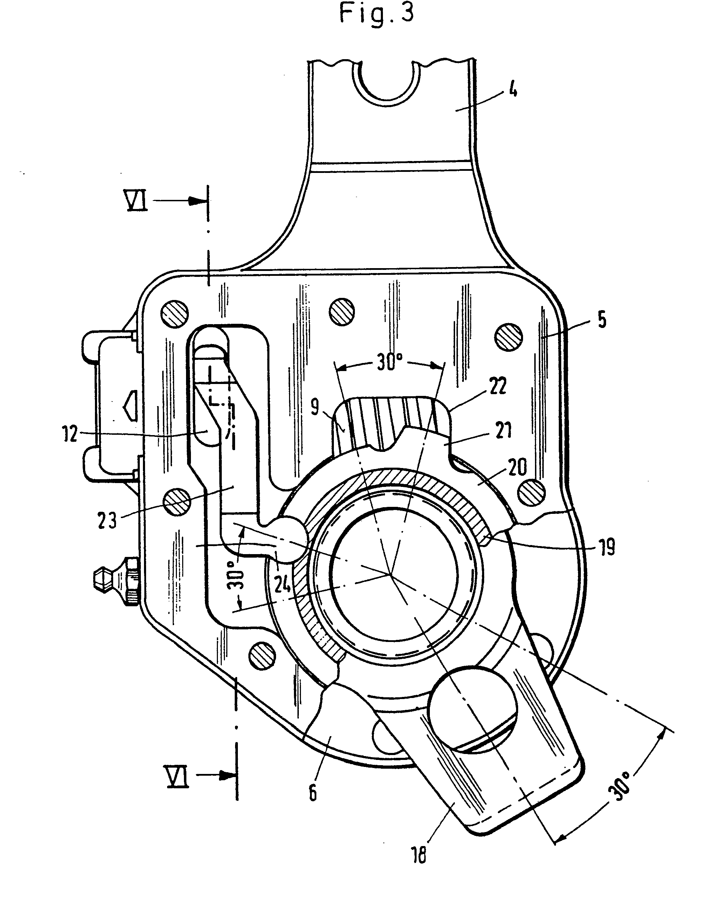

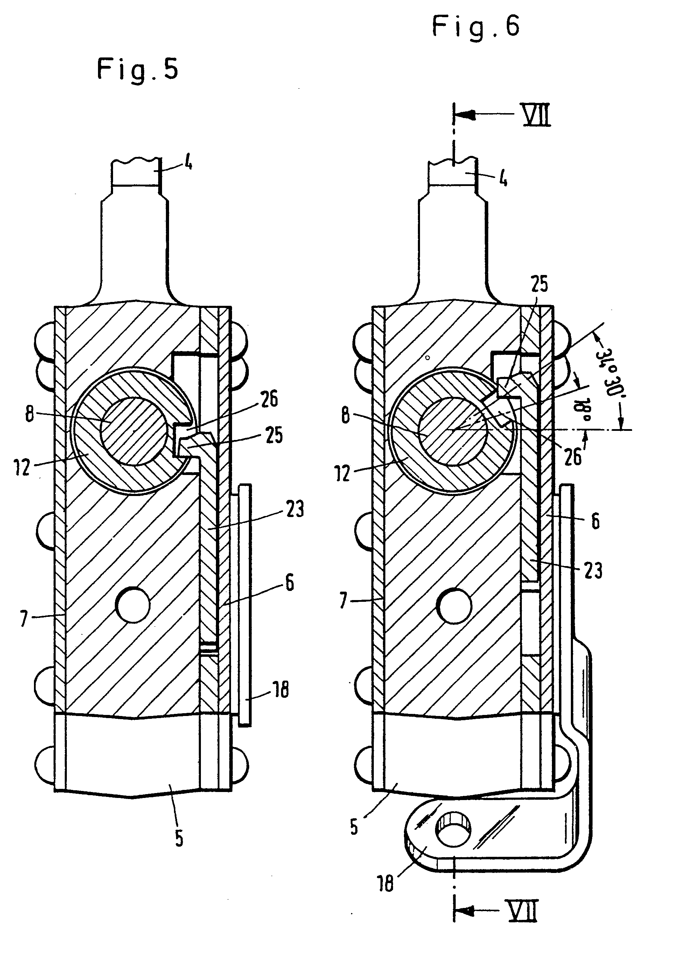

Beim Betätigen des Bremsgestänges wird der Bremshebel 4 relativ zum feststehenden Hebel 18 verdreht, wie es sich aus den Gegenüberstellungen der Fig. 2 und 3 bzw. 5 und 6 ergibt. Die maximale Verschwenkbewegung wird durch die Grösse der Aussparung 22 im Gehäuse 5 bzw. des in diese eingreifenden Anschlagnockens 21 begrenzt und beträgt im dargestellten Ausführungsbeispiel 30°. Bei der Schwenkbewegung wird der Kupplungsring 12 mit dem Treibglied 23 relativ zur Schneckenwelle 8 gedreht. Solange der Bremshub unterhalb der Teilung der Stirnverzahnungen 13, 15 der Kupplung 11 bleibt, erfolgt keine Nachstellung. Sobald der Bremshub aber infolge des Bremsbelagverschleisses grösser wird als die Teilung der beiden Stirnverzahnungen 13, 15, dann greifen die Zähne über, so dass beim Rückhub eine Nachstellung erfolgt.

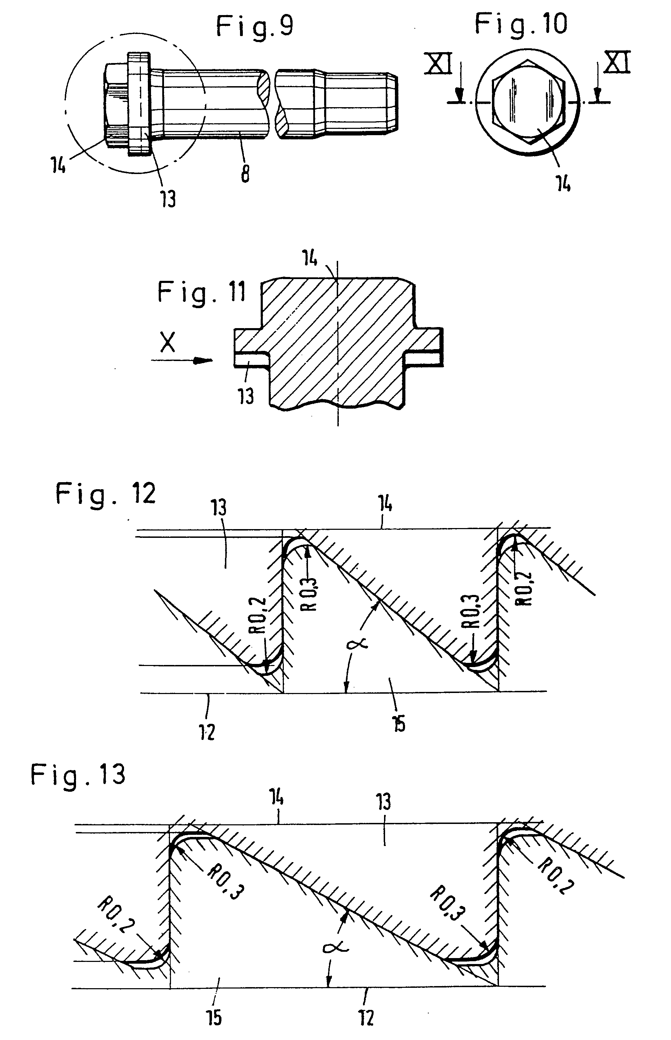

Die Schneckenwelle 8, unter deren Schneckenwellenkopf 14 die Stirnverzahnung 13 ausgebildet ist, besteht aus normalem Stahl. Der Kupplungsring 12, welcher drehbar auf der Schneckenwelle 8 angeordnet ist, besteht aus Sintermetall. Damit die Zähne der Stirnverzahnung 15 am Kupplungsring 12 immer eine satte Auflage an der Stirnverzahnung 13 der Schneckenwelle 8 haben, sind die beiden Verzahnungen schraubenförmig ausgebildet, wie es sich aus den Abwicklungen der Fig. 12 und 13 am inneren und äusseren Durchmesser ergibt.

Die Teilung der Zähne an den beiden Stirnverzahnungen 13, 15 und die Abmessungen der Ausnehmung 26 am Kupplungsring 12 und des Hakens 25 am Treibglied 23 müssen aufeinander abgestimmt werden, damit bei einem Hub immer nur eine Nachstellung um maximal eine Zahnlänge erfolgt und eine Beseitigung des für die Funktion der Bremse notwendigen Lüftspieles vermieden wird. Zu diesem Zweck ist der Haken 25 an seiner Aussenseite abgeschrägt und die Ausnehmung 26 ist grösser als der Haken 25, so dass das vordere Ende des Hakens 25 beim tangentialen Verschieben aus der Ausnehmung 26 austreten kann und den Kupplungsring 12 danach nicht mehr verstellt. Solange der Haken 25 aus der Ausnehmung 26 ausgetreten ist, wird der Kupplungsring 12 mit dem Ende des Hakens 25 in seiner Lage festgehalten, damit der Haken 25 beim Rückhub auch wieder in die Ausnehmung 26 eintreten kann. Der Winkel, um den der Kupplungsring 12 maximal verstellt werden kann, ist geringfügig grösser als die Teilung der Zähne an den beiden Stirnverzahnungen 13, 15. Auf diese Weise kann beim Rückhub eine Nachstellung um mehrere Zahnteilungen vermieden werden.

**Patentansprüche**

1. Selbsttätige Nachstellvorrichtung für Fahrzeugbremsen, insbesondere Kraftfahrzeugbremsen, mit einem als Bremshebel (4) dienenden Gehäuse (5), in dem ein aus Schnecke (9) und Schneckenrad (10) bestehendes Nachstellgetriebe angeordnet ist, welches über eine Kupplung (11) mit in radialer Ebene liegenden Stirnverzahnungen (13, 15) und ein Treibglied (23) mit einem in das Gehäuse (5) hineinragenden Hebel (18) zusammenarbeitet, der mit einem feststehenden Teil des Fahrzeuges verbunden ist, wobei eine der Stirnverzahnungen (13) der Kupplung (11) an einem auf der Schneckenwelle (8) in Achsrichtung federnd beweglich gelagerten Kupplungsring (12) ausgebildet ist und die Schneckenwelle (8) an dem aus dem Gehäuse ragenden Ende einen Sechskantkopf (14) aufweist, dadurch gekennzeichnet, dass die andere Stirnverzahnung (15) der Kupplung (11) unmittelbar an der Unterseite des Schneckenwellenkopfes (14) ausgebildet ist.

2. Nachstellvorrichtung nach Anspruch 1, dadurch gekennzeichnet, dass die beiden Stirnverzahnungen (13, 15) schraubenförmig ausgebildet sind.

3. Nachstellvorrichtung nach den Ansprüchen 1 und 2, dadurch gekennzeichnet, dass der Kupplungsring (12) einschliesslich seiner Stirnverzahnung (13) aus einem Sintermetall besteht.

**Revendications**

1. Dispositif automatique de rattrapage de jeu pour freins de véhicules, notamment freins de véhicules automobiles, comportant un boîtier (5) servant de levier de frein (4), dans lequel est disposé un mécanisme de rattrapage de jeu constitué d'une vis sans fin (9) et d'une roue tangente (10), ce mécanisme coopérant, par l'intermédiaire d'un accouplement (11) muni de dentures à crans (13, 15) situées dans des plans radiaux et d'un élément moteur (23), avec un levier (18) pénétrant dans le boîtier (5) et relié à une partie fixe de véhicule, l'une (13) des dentures à crans de l'accouplement (11) étant formée sur une couronne d'accouplement (12) montée sur l'arbre de vis sans fin (8) en pouvant se déplacer élastiquement en direction axiale et l'arbre de vis sans fin (8) présentant une tête à six-pans (14) à son extrémité sortant du boîtier, caractérisé en ce que l'autre denture à crans (15) de l'accouplement (11) est directement formée sur le côté inférieur de la tête (14) de l'arbre de vis sans fin.

2. Dispositif de rattrapage de jeu selon la revendication 1, caractérisé en ce que les deux dentures à crans (13, 15) sont hélicoïdales.

3. Dispositif de rattrapage de jeu selon les revendications 1 et 2, caractérisé en ce que la couronne d'accouplement (12) est, avec sa denture à crans (13), constituée en un métal fritté.

**Claims**

1. An automatic slack adjuster for vehicle brakes, more particularly motor vehicle brakes, the adjuster having a casing (5) which is operative as brake lever (4) and in which a slack adjuster mechanism comprising a worm (9) and a worm wheel (10) is disposed, the mechanism (5) cooperating, by way of an entraining member (23) and of a coupling (11), the latter having end toothings (13, 15) in a radial plane, with a lever (18) which extends into the casing (5) and which is secured to a stationary part of the vehicle, one (13) of the end toothings of the coupling (11) being devised on a coupling ring (12) so disposed on the worm shaft (8) as to e resiliently movable axially, the worm shaft (8) having a hexagonal head (14) at the end extending out of the casing (5), characterized in that the other end toothing (15) of the coupling (11) is devised directly on the underside of the worm shaft head (14).

2. An adjuster according to claim 1, characterized in that the two end toothings (13, 15) are helical.

3. An adjuster according to claims 1 and 2, characterized in that the coupling ring (12) and its end toothing (13) are made of a sintered metal.

0158034

# Fig.1

0158034

# Fig.2

7

# Fig. 3

Fig.4

Fig.6

Fig.5

13

0158034

Fig.7

Fig.8

0158034

## Fig.9

## Fig.10

## Fig. 11

## Fig. 12

## Fig.13

17